# EUROPÄISCHE PATENTANMELDUNG

(11) **EP 3 906 784 A1**
(43) Veröffentlichungstag der Anmeldung: **10.11.2021**
(21) Anmeldenummer: 20173101.5
(22) Anmeldetag: 06.05.2020
(51) Int. Cl.: A23C 9/15, A23C 15/12, A23C 19/076, A23C 20/00, A23D 7/00, A23D 7/005, A23D 7/015, A23C 15/16, A23D 7/02

(54) **STREICH- ODER SCHNEIDBARE LEBENSMITTEL**

(71) Anmelder: DMK Deutsches Milchkontor GmbH, 27404 Zeven (DE)
(72) Erfinder: STEIN, Markus, 26188 Edewecht (DE)
(74) Vertreter: Fabry, Bernd

(57) **Zusammenfassung**

Vorgeschlagen wird ein streich- oder schneidbares Lebensmittel, dadurch erhältlich oder erhalten dass man
(a) körnigen Frischkäse oder eine Zubereitung aus körnigem Frischkäse sowie analogen vegetarischen oder veganen Produkten vorlegt;
(b) Butter, Buttermischstreichfette oder daraus erhaltene Zubereitungen sowie analogen vegetarischen oder veganen Produkten vorlegt;
(c) gegebenenfalls weitere Nahrungsmittelbestandteile vorlegt;
(d) gegebenenfalls Aromen, Gewürze und/oder Farbstoffe vorlegt;
(e) die Bestandteile (a), (b) und gegebenenfalls (c) und/oder (d) zu einer homogenen Masse verarbeitet; und
(f) die homogene Masse aus (e) gegebenenfalls unter Abkühlen und Aushärten abfüllt.

## Beschreibung

### GEBIET DER ERFINDUNG

Die Erfindung befindet sich auf dem Gebiet der Lebensmitteltechnologie und betrifft ein streich- oder schneidbares Lebensmittel auf Basis von körnigem Frischkäse und Butter.

### TECHNOLOGISCHER HINTERGRUND

Ob als Brotaufstrich, zum Kochen oder Backen, Butter und verwandte Streichfette zählen zu den Lebensmitteln, die aus unserem täglichen Leben schwer wegzudenken sind. Der jährliche Pro-Kopf Verbrauch lag 2019 allein in Deutschland bei rund 6 Kg. Trotzdem wird in der Milchindustrie über Alternativen nachgedacht, die das Produkt "Butter" vom Image eines zweckbestimmten "langweiligen" Nahrungsmittels befreien und mit neuen Texturen eine attraktivere Optik erzeugen. Gleichzeitig besteht auch ein Bedürfnis, den Fett- und damit den Kaloriengehalt herab- und den Proteingehalt und damit den Nährwert heraufzusetzen. Schließlich sollte ein solches Produkt, das eine völlig neue Produktkategorie darstellt, infolge eines geringeren Fettgehaltes auch preiswerter herzustellen und anzubieten sein.

### RELEVANTER STAND DER TECHNIK

Gegenstand der WO 2018 159406 A1 (FUJI OIL) ist ein Verfahren zur Herstellung eines frischen, käseähnlichen pflanzlichen Lebensmittelproduktes, das frei von Milchprodukten ist, einen natürlichen, frischen, käseähnlichen Milchgeschmack und Körper hat und als Süßwarenmaterial eine ausgezeichnete Streichfähigkeit und Verformbarkeit aufweist. Der pH-Wert einer emulgierten Ölzusammensetzung, die eine emulgierte Sojabohnenzusammensetzung enthält, die ein spezifisches Protein und Lipid, ein spezifisches Sojabohnenproteinmaterial mit einem reduzierten Gehalt an einem lipophilen Protein unter den Sojabohnenproteinen und ein Proteinkoagulationsmittel beinhaltet, wird dabei auf einen pH-Wert von 5,5-6,3 unter Verwendung von Milchsäurefermentation und/oder einer organischen Säure eingestellt.

Aus den beiden Schriften EP 3053445 B1 und EP 3053448 B1 (DMK) sind streichfähige Lebensmittelzubereitungen bekannt, die (a) eine Frischkäsekomponente und (b) eine Frucht- bzw. eine Kräuterzubereitung umfassen, wobei die Komponenten (a) und (b) nebeneinander in einem Behälter vorhanden sind, so dass sie dreidimensional kontinuierliche Volumen einnehmen, die sich nicht vermischen.

### AUFGBE DER ERFINDUNG

Eine erste Aufgabe der vorliegenden Erfindung hat daher darin bestanden, ein neues streich- oder schneidfähiges Lebensmittel, speziell als Brotaufstrich zur Verfügung zu stellen, das sich durch einen hohen Protein-, jedoch geringen Fettgehalt auszeichnet und dabei einfach in der Herstellung und niedrig im Preis ist.

Eine zweite Aufgabe ist darin zu sehen, ein Produkt zur Verfügung zu stellen, dass optisch ansprechend ist und sich leicht in Geschmack und Farbe variieren lässt.

### BESCHREIBUNG DER ERFINDUNG

Ein erster Gegenstand der Erfindung betrifft ein streich- oder schneidbares Lebensmittel, dadurch erhältlich oder erhalten, dass man
(a) körnigen Frischkäse oder eine Zubereitung aus körnigem Frischkäse sowie analogen vegetarischen oder veganen Produkten vorlegt;
(b) Butter, Buttermischstreichfette oder daraus erhaltene Zubereitungen sowie analogen vegetarischen oder veganen Produkten vorlegt;
(c) gegebenenfalls weitere Nahrungsmittelbestandteile vorlegt;
(d) gegebenenfalls Aromen, Gewürze und/oder Farbstoffe vorlegt;
(e) die Bestandteile (a), (b) und gegebenenfalls (c) und/oder (d) zu einer homogenen Masse verarbeitet; und
(f) die homogene Masse aus (e) unter Abkühlen und Aushärten abfüllt.

Überraschenderweise wurde gefunden, dass das erfindungsgemäße Produkt die eingangs geschilderte umfangreiche Aufgabe vollständig erfüllt. Die Kombination aus Frischkäse und Butter bzw. Mischfetten führt zu einem proteinreichen Lebensmittel, welches im Vergleich zu Butter über einen deutlich geringeren Fettanteil verfügt. Durch Variation der Bestandteile lässt sich die Konsistenz auf die von Butter oder Mischstreichfetten einstellen, also bei Kühlschranktemperatur schnittfest oder streichfähig.

Während die Vermischung der Komponenten bei Umgebungstemperatur zunächst zu einer weitgehend homogenen Masse führt, wurde überraschend beobachtet, dass die Mischung bei Abkühlen und Aushärten eine Struktur aufweist, in der der Frischkäsebestandteil wieder körnig in einer Buttermatrix vorliegt. Dies führt zu einer interessanten und optisch ansprechenden Textur, wenn das Produkt angeschnitten oder verstrichen wird. Beim Braten, Kochen bei der Auflage auf einer Pizza oder als Zugabe zu Suppen schmilzt der Fettbestandteil und die "Proteinflocken" bleiben sichtbar.

Die Zusammensetzung lässt sich zudem durch Zugabe weiterer Bestandteile beliebig ergänzen bzw. geschmacklich abändern und ist technisch einfach herzustellen.

### FRISCHKÄSE-KOMPONENTE

Bei der Komponente (a) handelt es sich um körnigen Frischkäse. Dieser wird aus pasteurisierter Milch hergestellt, die entweder nur durch Säuerung oder durch eine Kombination einer Säure mit einer Lab-Fällung dickgelegt wird. Durch Zugabe von Rahm wird der Fettgehalt eingestellt. Werden Kräuter, Früchte usw. beigegeben, handelt es sich um eine Frischkäse-Zubereitung. Zur Herstellung von körnigem Frischkäse werden Milchsäurebakterien sowie meist auch eine geringe Menge Lab oder Lab-Austauschstoffe der erhitzten Milch zugesetzt. Nun beginnt die Dicklegung der Milch. Durch Koagulieren des Caseins wird die so genannte "Gallerte" ausgefällt. Zuerst wird der Bruch mit einer Käseharfe geschnitten, wodurch es zum Molkenaustritt kommt (Synärese), je kleiner die Bruchkorngröße, desto mehr Molke tritt aus und desto fester wird der Käsebruch. Die Synärese und der Molkenaustritt werden durch das Erwärmen des Quarkbruchs auf 35-55 °C gefördert.

Körniger Frischkäse, der auch als "Cottage Cheese" oder "Hüttenkäse" bezeichnet wird, ist ein aufgefetteter frischer Bruch von geringem Säuregehalt als Folge eines gründlichen Waschens währen der Herstellung. Gründliches Waschen mit Kaltwasser löst die Laktose und Milchsäure. Weiteres Säuern und Schrumpfen des Bruch-Korns werden durch Kühlen des warmen Bruches auf ca. 4-5°C unterbunden. Die gesamte Zeit für Waschen incl. dazwischen liegendem Molke-Wasser-Abzug beträgt ca. 3 Stunden.

Frischkäse muss einen Wassergehalt in der fettfreien Käsemasse von über 73 Prozent aufweisen. Zu den Frischkäsesorten gehören auch Mascarpone und Ricotta. Im Sinne der Erfindung wird jedoch vorzugsweise körniger Frischkäse eingesetzt, der auch als Hüttenkäse oder "Cottage Cheese" bezeichnet wird.

Alternativ zu körnigem Frischkäse können auch daraus erhältliche Zubereitungen sowie vergleichbare vegetarisch oder vegane Produkte eingesetzt werden.

### BUTTER-KOMPONENTE

Bei der Komponente (b) handelt es sich um Butter oder einen Butterersatzstoff, deren Definition in der **Deutschen ButterVO** geregelt ist. Neben Standardbutter kann auch mild gesäuerte, d.h. mit Säuerungspermeat behandelte Butter oder Butter auf Basis von Sauerrahm eingesetzt werden.

Als Alternative kommen so genannte Mischstreichfette in Betracht, die eine Mischung aus Butter, pflanzlichen Fetten und/oder Ölen sowie gegebenenfalls weiteren Geschmacksbestandteilen darstellen. Diese zeichnen sich dadurch aus, dass sie bei Kühlschranktemperatur streichfähig sind; sie müssen jedoch gemäß **Europäischer StreichfettVO** mindestens 15 Gew.-% bei Umgebungstemperatur feste Fette - bezogen auf den gesamtfettgehalt - aufweisen.

Entsprechende Produkte werden beispielsweise WO 1989 010700 A1 (ALFA LAVAL), EP 0583344 B1 (APV PASILAC), EP 1688044 B1 (DRAGSBAEK), EP 2923580 B1 (DMK) oder EP 3403508 A1 (DMK) bekannt.

### WEITERE NAHRUNGSMITTELBESTANDTEILE

Die Auswahl der weiteren Nahrungsmittelbestandteile, die als fakultative Komponente (c) vorhanden sein können, ist unkritisch und wird nur durch Einsatzzweck, Geschmack oder Optik bestimmt. Vorzugsweise handelt es sich dabei ebenfalls um Milchprodukte, wie Käse, insbesondere Feta oder Proteinflocken, speziell Milchproteine. Es können aber auch vegane Stoffe wie Tofu, Tempeh, Seitan, Palmin oder Miso verwendet werden.

### AROMA- UND FARBKOMPONENTEN

Bei der Komponente (d) kann es sich vorzugsweise um Kochsalz, Gewürze, getrocknete Kräuter (oder Gemüse) und/oder Lebensmittelfarbstoffe handeln. Die Natur dieser Zusatzstoffe ist im Sinne der Erfindung wenig kritisch und wird im Wesentlichen durch die geschmacklichen Vorgaben bestimmt.

Zu den wichtigsten **Gewürzen** gehören neben (Koch-)Salz, Pfeffer, Curry, Paprika und dergleichen.

Unter den **Kräutern** sind Petersilie, Rosmarin, Thymian, Salbei, Kerbel und Dill bevorzugt.

Bei den **Gemüsen** kommen vor allem solche in Betracht, die eine herzhafte Note und/oder frische Farbe aufweisen, wie beispielsweise Gurken, Radieschen, Zwiebeln, Knoblauch, Rettich, (getrocknete) Tomaten und dergleichen.

Die Komponenten können frisch in pürierter Form, d.h. mit einem Wasseranteil von bis zu etwa 20 Gew.-% eingesetzt werden oder gleich als Würzpaste, in der auch weitere Zusatzstoffe, wie beispielsweise synthetische Aromen enthalten sein können.

**Lebensmittelfarbstoffe** oder kurz Farbstoffe sind Lebensmittelzusatzstoffe zum Färben von Lebensmittel. Farbstoffe werden in die Gruppen der natürlichen Farbstoffe und synthetischen Farbstoffe unterteilt. Die naturidentischen Farbstoffe sind ebenfalls synthetischen Ursprungs.

Die naturidentischen Farbstoffe sind synthetische Nachbildungen von in der Natur vorkommenden, färbenden Substanzen. Geeignete Farbstoffe für den Einsatz in der vorliegenden Zusammensetzung sind ausgewählt aus: Kurkumin, E 100 Riboflavin, Lactoflavin, Laktoflavin, Vitamin B2, E 101 Tartrazin, E 102 Chinolingelb, E 104 Gelborange S, Gelborange RGL, E 110 Cochenille, Karminsäure, echtes Karmin, E 120 Azorubin, Carmoisin, E 122 Amaranth, E 123 Cochenillerot A, Ponceau 4 R, Victoriascharlach 4 R, E 124 Erythrosin, E 127 Allurarot AC, E 129 Patentblau V, E 131 Indigotin, Indigo-Karmin, E 132 Brillantblau FCF, Patentblau AE, Amidoblau AE, E 133 Chlorophylle, Chlorophylline, E 140 Kupferkomplexe der Chlorophylle, Kupfer-Chlorophyllin-Komple, E 141 Brillantsäuregrün, Grün S, E 142 Zuckerkulör, Zuckercouleur, E 150 a Sulfitlaugen-Zuckerkulör, E 150 b Ammoniak-Zuckerkulör, E 150 c Ammoniumsulfit-Zuckerkulör, E 150 d Brillantschwarz FCF, Brillantschwarz PN, Schwarz PN, E 151 Pflanzenkohle, E 153 Braun FK, E 154 Braun HT, E 155 Carotin, Karotin, E 160 a Annatto, Bixin, Norbixin, E 160 b Capsanthin, Capsorubin, E 160 c Lycopin, E 160 d Beta-apo-8'-Carotinal, Apocarotinal, Beta-Apocarotinal, E 160 e Beta-apo-8'-Carotinsäure-Ethylester (C30), Apocarotinester, Beta-Carotinsäureester, E 160 f Lutein, Xanthophyll, E 161 b Canthaxanthin, E 161 g Betanin, Betenrot, E 162 Anthocyane, E 163 Calciumcarbonat, E 170 Titandioxid, E 171 Eisenoxide, Eisenhydroxide, E 172 Aluminium, E 173 Silber, E 174 Gold, E 175 Litholrubin BK, Rubinpigment BK, E 180.

Auch Fruchtzubereitungen, wie beispielsweise Äpfel-, Birnen- oder Mango-Püree, die sowohl Farbe- als auch Geschmack verleihen, können zugesetzt werden ("Flocken-Fudge").

### ZUSAMMENSETZUNGEN

In einer bevorzugten Ausführungsform der Erfindung besitzen die Lebensmittel die folgende Zusammensetzung:
(a) etwa 10 bis etwa 90 Gew.-%, vorzugsweise etwa 25 bis etwa 75 Gew.-% und insbesondere etwa 40 bis etwa 60 Gew.-% Frischkäse oder Frischkäsezubereitungen;
(b) etwa 10 bis etwa 90 Gew.-%, vorzugsweise etwa 25 bis etwa 75 Gew.-% und insbesondere etwa 40 bis etwa 60 Gew.-% Butter, Buttermischstreichfette oder daraus erhaltene Zubereitungen;
(c) 0 bis etwa 20 Gew.-%, vorzugsweise etwa 1 bis etwa 20 Gew.-% und insbesondere etwa 5 bis etwa 15 Gew.-% weitere Nahrungsmittelbestandteile;
(d) 0 bis etwa 2 Gew.-%, vorzugsweise etwa 0,1 bis etwa 1,5 Gew.-% und insbesondere etwa 0,5 bis etwa 1 Gew.-% Aromen, Gewürze und/oder Farbstoffe;
mit der Maßgabe, dass sich alle Mengenangaben gegebenenfalls mit Wasser oder Milch, insbesondere Magermilch oder Rahm, zu 100 Gew.-% ergänzen.

Der guten Ordnung halber sei darauf hingewiesen, dass Zubereitungen wie oben beschrieben, die rechnerisch möglich sind und weniger als 100 Gew.-% oder mehr als 100 Gew.-% ergeben, nicht vom Schutzumfang dieser Anmeldung umfasst sind. Aufgrund der vorgegebenen Lehre ist der Fachmann zwanglos in der Lage, entsprechende Mischungen aufzufinden, die erfindungsgemäß sind und 100 Gew.-% ergeben, ohne dazu erfinderisch tätig werden zu müssen.

### HERSTELLVERFAHREN

Ein weiterer Gegenstand der Erfindung betrifft ein Verfahren zur Herstellung streich- oder schneidbarer Lebensmittel, umfassend oder bestehend aus den folgenden Schritten:
(a) Bereitstellen von Frischkäse oder einer Frischkäsezubereitung;
(b) Bereitstellen von Butter, Buttermischstreichfetten oder daraus erhaltenen Zubereitungen;
(c) gegebenenfalls Bereitstellen weiterer Nahrungsmittelbestandteile;
(d) gegebenenfalls Bereitstellen von Aromen, Gewürzen und/oder Farbstoffen;
(e) Vermischen und Verarbeiten der Bestandteile (a), (b) und gegebenenfalls (c) und/oder (d) bei 0 bis etwa 30 °!C und insbesondere 18 bis 22 °C zu einer homogenen Masse;
(f) Abkühlen und Aushärten der homogenen Masse aus (e);
(g) Abfüllen der homogenen Masse in die Verpackung.

Vorzugsweise wird als Komponente (a) körnigen Frischkäse sowie - unabhängig davon als Komponente (b) mild gesäuerte Butter, Sauerrahmbutter oder Mischstreichfette aus Butter und Pflanzenölen eingesetzt.

Die Komponenten (a) und (b) können im Gewichtsverhältnis von etwa 10:90 bis etwa 90:10, vorzugsweise von etwa 25:75 bis etwa 75:25 und insbesondere von etwa 40:60 bis etwa 60:40 vermischt und homogenisiert werden.

Es ist ebenfalls bevorzugt, den Komponenten (a) und (b) als weiteren Zusatzstoff (c) Feta, Tofu und/oder Proteinflocken beizumischen. Dabei kann die Komponente (c) in einer Menge von etwa 1 bis etwa 20 Gew.-%, vorzugsweise von etwa 5 bis etwa 15 Gew.-% und insbesondere von etwa 8 bis etwa 12 Gew.-% - bezogen auf die Summe der Komponenten (a+b) - zugegeben werden.

Es ist weiterhin bevorzugt den Komponenten (a) und (b) als weiteren Zusatzstoff (d) Kochsalz, getrocknete Kräuter, Gewürze und/oder Lebensmittelfarbstoffe beizumischen. Dabei kann die Komponente (d) in einer Menge von etwa 0,5 bis etwa 2 Gew.-%, vorzugsweise von etwa 0,7 bis etwa 1,5 Gew.-% und insbesondere von etwa 1 bis etwa 1,2 Gew.-% - bezogen auf die Summe der Komponenten (a+b) - zugegeben werden.

Die Vermischung kann dabei dergestalt erfolgen, dass zunächst die Komponenten (a) und (b) vermischt und homogenisiert werden, ehe die Komponenten (c) und (d) hinzugegeben werden. Es ist jedoch ebenfalls möglich, alle Komponenten gemeinsam vorzulegen und zu vermischen. Werden die getrockneten Kräuter, Gewürze oder Lebensmittelfarbstoffe erst abschließend hinzugegeben, kann in der gelblich-weißen Masse ein Muster, beispielsweise eine Spirale erzeugt werden. Die Homogenisierung findet bei einer Temperatur statt, bei der die Komponenten weder erstarrt noch flüssig vorliegen, sondern sich geschmeidig verhalten und ohne große Scherkraft vermischt und homogenisiert werden können; dies ist in der Regel im Bereich von 0 bis etwa 30 und insbesondere etwa 18 bis 22 °C möglich.

Die homogenisierten Massen werden anschließend beispielsweise auf 5 bis 15 °C abgekühlt und dabei gehärtet. Dies kann vor dem Verpacken geschehen, aber auch danach, d.h. in der Verpackung. Dabei zeigen die Zubereitungen ein unerwartetes physikochemisches Verhalten: während dem Vermischen bildet sich eine homogene Phase, beim Abkühlen bilden sich jedoch die ursprünglichen Strukturen wieder zurück, d.h. das Mischprodukt zeigt wieder die ursprüngliche körnige Struktur des Frischkäses. Dies wird deutlich, wenn man die Zubereitung verstreicht oder anschneidet.

### GEWERBLICHE ANWENDBARKEIT

Ein weiterer Gegenstand der Erfindung betrifft die Verwendung des oben beschriebenen neuen schneid- oder streichbaren Lebensmittels, als Aufstrich, Dip, Fonduebasis, Zusatz zum Kochen und Backen sowie als Pizza Belag, Zusatz zu Suppen und Desserts.

### BEISPIELE

### BEISPIEL 1

### Herstellung eines Mischproduktes

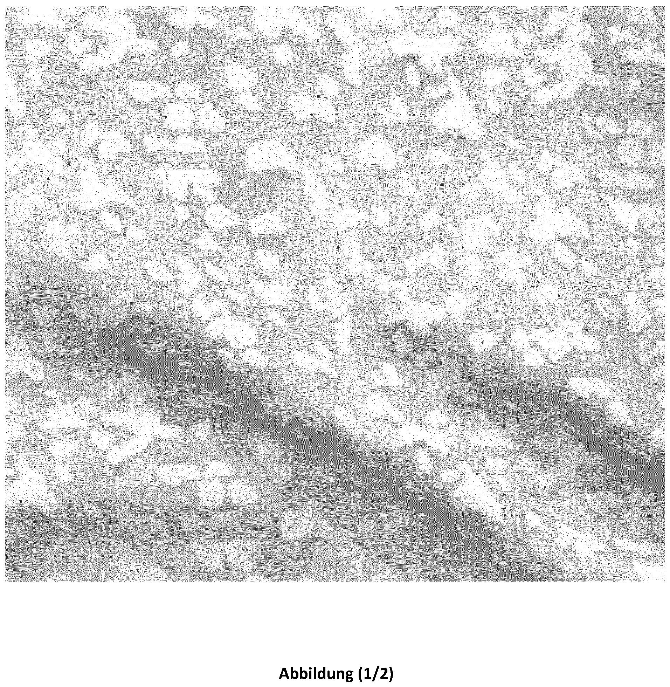

In einem Mischbehälter wurden bei 18 °C 690 g Standardbutter und 300 g körniger Frischkäse vorgelegt und bei geringer Rührgeschwindigkeit über einen Zeitraum von 20 Minuten miteinander vermengt, bis eine annähernd homogene Masse entstand. Zu dieser Masse wurden 10 g Kochsalz gegeben und weitere 10 Minuten gerührt. Die Masse wurde in 250 g Behälter abgefüllt und 12 h bei 10 °C ausgehärtet. Es wurde ein schnittfestes Produkt erhalten, in dem die Frischkäsekörner in einer Butterphase zu erkennen waren (vgl. **Abbildung 1).**

### BEISPIEL 2

### Herstellung eines Mischproduktes mit Feta

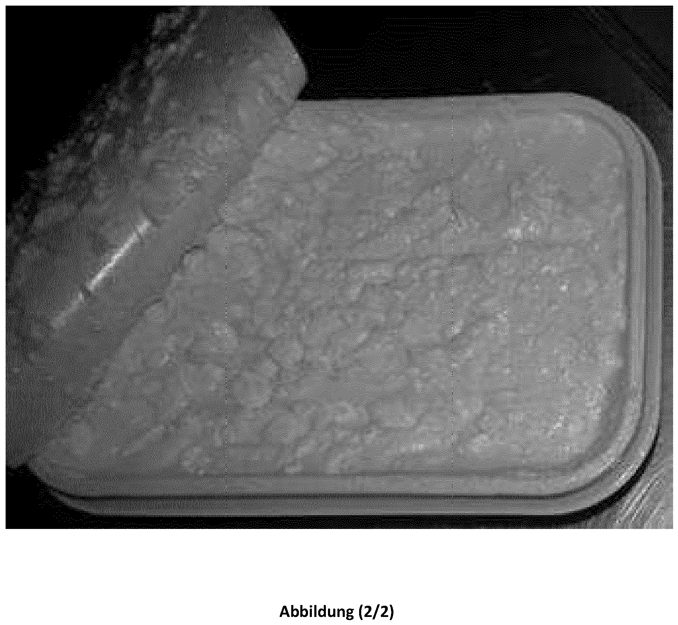

In einem Mischbehälter wurden bei 18 °C 650 g Standardbutter und 250 g körniger Frischkäse vorgelegt und bei geringer Rührgeschwindigkeit über einen Zeitraum von 20 Minuten miteinander vermengt, bis eine annähernd homogene Masse entstand. Zu dieser Masse wurden 90 g klein geschnittener Feta und 10 g Kochsalz gegeben und weitere 10 Minuten gerührt. Die Masse wurde in 250 g Behälter abgefüllt und 12 h bei 10 °C ausgehärtet. Es wurde ein schnittfestes Produkt erhalten, in dem die Komponenten Frischkäse und Feta in einer Butterphase zu erkennen waren (vgl. **Abbildung 2**).

### BEISPIEL 2

### Herstellung eines Mischproduktes mit Tofu

In einem Mischbehälter wurden bei 18 °C 640 g Mischstreichfett und 240 g körniger Frischkäse vorgelegt und bei geringer Rührgeschwindigkeit über einen Zeitraum von 20 Minuten miteinander vermengt, bis eine annähernd homogene Masse entstand. Zu dieser Masse wurden 90 g klein geschnittener Tofu und 10 g Kochsalz und 20 g Wasabi Pulver gegeben und weitere 10 Minuten gerührt. Die Masse wurde in 250 g Behälter abgefüllt und 12 h bei 10 °C ausgehärtet. Es wurde ein schnittfestes Produkt erhalten, in dem die Komponenten Frischkäse und Tofu in einer Butterphase zu erkennen waren.

## Patentansprüche

1. Streich- oder schneidbares Lebensmittel, dadurch erhältlich oder erhalten dass man
(a) körnigen Frischkäse oder eine Zubereitung aus körnigem Frischkäse sowie analogen vegetarischen oder veganen Produkten vorlegt;
(b) Butter, Buttermischstreichfette oder daraus erhaltene Zubereitungen sowie analogen vegetarischen oder veganen Produkten vorlegt;
(c) gegebenenfalls weitere Nahrungsmittelbestandteile vorlegt;
(d) gegebenenfalls Aromen, Gewürze und/oder Farbstoffe vorlegt;
(e) die Bestandteile (a), (b) und gegebenenfalls (c) und/oder (d) zu einer homogenen Masse verarbeitet; und
(f) die homogene Masse aus (e) gegebenenfalls unter Abkühlen und Aushärten abfüllt.

2. Lebensmittel nach Anspruch 1, **dadurch gekennzeichnet, dass** es sich bei der Komponente (a) um körnigen Frischkäse handelt.

3. Lebensmittel nach den Ansprüchen 1 und/oder 2, **dadurch gekennzeichnet, dass** es sich bei der Komponente (b) um mild gesäuerte Butter, Sauerrahmbutter oder um ein Mischstreichfett aus Butter und Pflanzenölen handelt.

4. Lebensmittel nach mindestens einem der Ansprüche 1 bis 3, **dadurch gekennzeichnet, dass** es sich bei der Komponente (c) um Feta, Tofu und/oder Proteinflocken handelt.

5. Lebensmittel nach mindestens einem der Ansprüche 1 bis 4, **dadurch gekennzeichnet, dass** es sich bei der Komponente (d) um Kochsalz, getrocknete Kräuter und/oder Lebensmittelfarbstoffe handelt.

6. Lebensmittel nach mindestens einem der Ansprüche 1 bis 5, **dadurch gekennzeichnet, dass** es
(a) etwa 10 bis etwa 90 Gew.-% Frischkäse oder Frischkäsezubereitungen;
(b) etwa 10 bis etwa 90 Gew.-% Butter, Buttermischstreichfette oder daraus erhaltene Zubereitungen;
(c) 0 bis etwa 20 Gew.-% weitere Nahrungsmittelbestandteile;
(d) 0 bis etwa 2 Gew.-% Aromen, Gewürze und/oder Farbstoffe;
mit der Maßgabe, dass sich alle Mengenangaben gegebenenfalls mit Wasser oder Milch zu 100 Gew.-% ergänzen.

7. Verfahren zur Herstellung streich- oder schneidbarer Lebensmittel, umfassend oder bestehend aus den folgenden Schritten:
(a) Bereitstellen von Frischkäse oder einer Frischkäsezubereitung;
(b) Bereitstellen von Butter, Buttermischstreichfetten oder daraus erhaltenen Zubereitungen;
(c) gegebenenfalls Bereitstellen weiterer Nahrungsmittelbestandteile;
(d) gegebenenfalls Bereitstellen von Aromen, Gewürzen und/oder Farbstoffen;
(e) Vermischen und Verarbeiten der Bestandteile (a), (b) und gegebenenfalls (c) und/oder (d) bei 0 bis 30 °Czu einer homogenen Masse;
(f) Abkühlen und Aushärten der homogenen Masse aus (e);
(g) Abfüllen der homogenen Masse in die Verpackung.

8. Verfahren nach Anspruch 7, **dadurch gekennzeichnet, dass** man als Komponente (a) körnigen Frischkäse einsetzt.

9. Verfahren nach den Ansprüchen 7 und/oder 8, **dadurch gekennzeichnet, dass** man als Komponente (b) mild gesäuerte Butter, Sauerrahmbutter oder Mischstreichfette aus Butter und Pflanzenölen einsetzt.

10. Verfahren nach mindestens einem der Ansprüche 7 bis 9, **dadurch gekennzeichnet, dass** man die Komponenten (a) und (b) im Gewichtsverhältnis von etwa 10:90 bis etwa 90:10 vermischt und homogenisiert.

11. Verfahren nach mindestens einem der Ansprüche 7 bis 10, **dadurch gekennzeichnet, dass** man den Komponenten (a) und (b) als weiteren Zusatzstoff (c) Feta, Tofu und/oder Proteinflocken beimischt.

12. Verfahren nach Anspruch 11, **dadurch gekennzeichnet, dass** man die Komponente (c) in einer Menge von etwa 1 bis etwa 20 Gew.-% - bezogen auf die Summe der Komponenten (a+b) - beimischt.

13. Verfahren nach mindestens einem der Ansprüche 7 bis 12, **dadurch gekennzeichnet, dass** man den Komponenten (a) und (b) als weiteren Zusatzstoff (d) Kochsalz, getrocknete Kräuter und/oder Lebensmittelfarbstoffe beimischt.

14. Verfahren nach Anspruch 13, **dadurch gekennzeichnet, dass** man die Komponente (d) in einer Menge von etwa 0,5 bis etwa 2 Gew.-% - bezogen auf die Summe der Komponenten (a+b) - beimischt.

15. Verwendung des Lebensmittelproduktes nach Anspruch 1 oder des Verfahrensproduktes nach Anspruch 7 als Aufstrich, Dip, Fonduebasis, Zusatz zum Kochen und Backen sowie als Pizza Belag und Zusatz zu Suppen und Desserts.
